**Europäisches Patentamt**

**European Patent Office**

**Office européen des brevets**

(11) Veröffentlichungsnummer: **0 022 447**
**B1**

(12) # EUROPÄISCHE PATENTSCHRIFT

(45) Veröffentlichungstag der Patentschrift:
**10.08.83**

(51) Int. Cl.³: **B 65 G 15/00**

(21) Anmeldenummer: **80101668.4**

(22) Anmeldetag: **27.03.80**

(54) Verfahren und Vorrichtung zum automatischen Gruppieren von Setzlagen eines Stapelgutes.

(30) Priorität: **16.07.79 DE 2928665**

(43) Veröffentlichungstag der Anmeldung:
**21.01.81 Patentblatt 81/3**

(45) Bekanntmachung des Hinweises auf die Patenterteilung:
**10.08.83 Patentblatt 83/32**

(84) Benannte Vertragsstaaten:
**BE FR GB**

(56) Entgegenhaltungen:
**AT-B-342 503**
**AT-B-352 629**
**DD-A-25 343**
**DD-A-25 580**
**DD-A-43 110**
**DE-A-2 353 752**
**DE-B-1 684 038**

(73) Patentinhaber: **Fuchs & Co. Aktiengesellschaft für Elektrodraht-Erzeugung und Maschinenbau, Puntigamerstrasse 127, A-8055 Graz (AT)**

(72) Erfinder: **Eustacchio, Claudio, Krottendorferstrasse 32, A-8032 Graz (AT)**

(74) Vertreter: **Kirschner, Klaus Dieter et al, Patentanwälte Kirschner & Grosse Herzog-Wilhelm-Strasse 17, D-8000 München 2 (DE)**

## Verfahren und Vorrichtung zum automatischen Gruppieren von Setzlagen eines Stapelgutes

Die Erfindung betrifft ein Verfahren und eine Vorrichtung zum automatischen Gruppieren von Setzlagen eines Stapelgutes, insbesondere von Ziegelformlingen, wobei die Setzlagen des Stapelgutes in vorzugsweise mehreren nebeneinanderliegenden Längszeilen in Stapelbreite auf ein Zuführband aufgegeben werden, welche das Stapelgut gegen eine Stoppvorrichtung, insbesondere einen Richtbalken, schiebt und stillgesetzt wird, woraufhin die Stoppvorrichtung angehoben wird und die ausgerichtete Setzlage auf ein sich an das Zuführband anschliessendes und mit gleicher Geschwindigkeit wie das Zuführband in Bewegung gesetztes Laufband übergeben wird.

Ein Verfahren und eine Vorrichtung der vorbeschriebenen Art sind durch die DE-B Nr. 1281637 bekanntgeworden. Gemäss dem dort beschriebenen Verfahren geschieht das Bilden von Querreihen von Ziegelformlingen, die auf einem Band laufend an eine Anschlagvorrichtung angeschoben werden, mit Hilfe von zwei Bändern, wobei die Querreihen dadurch gebildet werden, dass die beiden hintereinander geschalteten und in einer Ebene liegenden Bänder eine unterschiedliche Geschwindigkeit bis zum völligen Stillstand des ersten Bandes besitzen. Durch die Differenzgeschwindigkeit der beiden Bänder, bzw. durch das Stoppen des ersten Bandes, wird eine Ziegelgruppierung in bestimmten Abständen erreicht.

Durch die DE-A Nr. 2417160 ist eine weitere Gruppiervorrichtung einer Setzmaschine bekanntgeworden, gemäss welcher die Ziegelformlinge ebenfalls auf einem Laufband bis zu einem Anschlag geschoben und nach Heben des Anschlages in Intervallen vom bewegten Laufband abgehoben und wieder aufgesetzt werden, so dass hierdurch die gewünschten Abstände der Querreihen erzielt werden.

Beide Gruppiervorrichtungen der vorbeschriebenen bekannten Setzmaschinen arbeiten jedoch in bezug auf exakte millimetergenaue Abstände nicht genügend genau, denn durch die beim Überschieben von einem Laufband auf das nachfolgende Laufband auftretende Reibung oder durch das Abheben von einem bewegten Laufband und das anschliessende Wiederabsetzen auf das bewegte Laufband treten zwangsläufig Ungenauigkeiten auf.

Schliesslich sind ein Verfahren und eine Vorrichtung zum Bilden von Lücken in einer kontinuierlich geförderten Formlingsreihe bekannt (DE-B Nr. 1684038), wobei die Vereinzelung der Formlingsreihe durch zwei hintereinander geschaltete Fördereinrichtungen, nämlich Zuführband und Laufband, erfolgt, von denen das Laufband mit einer grösseren Geschwindigkeit als das Zuführband angetrieben ist. Zusätzlich zu dieser Vereinzelung erfolgt eine Gruppierung der Formlinge zu einzelnen Formlingsgruppen aufgrund einer Verschwenkung des Zuführbandes, was eine Verkürzung bzw. Verlängerung des Zuführbandes bewirkt. Hierdurch erfolgt eine Überlagerung der Vereinzelungsbewegung der beiden Fördereinrichtungen durch eine Relativverschwenkung, so dass eine genaue Abstandseinhaltung der Formlinge untereinander nicht gewährleistet werden kann.

Schliesslich ist eine Stapel- und Fördervorrichtung von auf Paletten angeordneten keramischen Formlingen bekannt (DD-A Nr. 43110), wonach mittels eine Senkrechtförderers herangeführte Paletten auf eine Förderkette aufgegeben werden. Hierzu wird eine Förderkette eines verfahrbaren Gestells mit darauf in Abständen aufgesetzten Paletten mittels einer Hubstange zum Senkrechtförderer bewegt. Um Platz für die Aufgabe der neuen Palette zu schaffen, wird die Förderkette entgegen der Ausfahrbewegung des Gestells angetrieben, so dass die Paletten auf dem verfahrbaren Gestell verlagert werden. Dies steht aber in keinerlei Zusammenhang mit einer Vereinzelung der auf der Förderkette befindlichen Paletten. Dies ergibt sich bereits daraus, weil sich diese bereits in einem Abstand zueinander auf der Förderkette befinden und der Abstand der einzelnen Paletten zueinander während des Verfahrens des Gestells nicht beeinflusst bzw. verändert wird. Darüberhinaus sind die Formlinge auf den Paletten bereits zu einer Formlingsreihe nebeneinander angeordnet, wobei diese Anordnung durch das Verfahren des Gestells gleichfalls nicht beeinflusst wird.

Die Erfindung, wie sie in den Ansprüchen gekennzeichnet ist, löst die Aufgabe, das Verfahren und die Vorrichtung gemäss dem Oberbegriff des Patentanspruchs 1 bzw. 3 (DE-B Nr. 1281637) derart zu verbessern, dass die einzelnen Querreihen einer Setzlage exakt die programmgesteuerten Abstände aufweisen. Dabei soll eine Veränderung der Abstände zwischen einzelnen Querreihen deshalb vermieden werden, damit beim Umsetzen oder bei der Stapelbildung das Eingreifen von Umsetzgreifern bzw. das Übereinanderanordnen von Setzlagen nicht beeinträchtigt wird und eine für das Trocknen und Brennen optimale Distanzierung der einzelnen Querreihen erzielt und beibehalten wird.

Gemäss der Erfindung werden also ein Verfahren und eine Vorrichtung vorgeschlagen, gemäss welchem bzw. welcher eine vorbestimmte Länge von auf dem Zuführband dicht aufgereihten Ziegelformlingen von einem zweiten verfahrbaren Laufband übernommen wird. Das zweite Laufband fährt in Förderrichtung bis zu einer Endstelle, wo es abgestoppt wird. Beim Rückwärtsfahren wird das zweite Laufband nun in vorbestimmten Intervallen in Gang gesetzt, wobei seine Transportgeschwindigkeit der Bewegungsgeschwindigkeit entspricht. Allerdings sind die beiden Bewegungen entgegengesetzt, so dass eine jeweilige Querreihe am Ende des Laufbandes auf eine Bereitstellungseinrichtung übergeben wird. Da sich die entgegengesetzt gerichteten Bewegungen im Verschneidungspunkt zwischen dem Laufband und der Aufnahmefläche der Bereitstellungseinrichtung aufheben, ist die Relativbewegung einer Querreihe gleich Null, so dass zwischen der abgesetzten Querreihe und den Förderelementen keine Reibungskräfte auftreten und damit die Querreihe millimetergenau an der vorprogrammierten Stelle auf der Bereitstellungseinrichtung angeordnet wird.

Nachfolgend werden Ausführungsbeispiele der Erfindung anhand der Zeichnung beschrieben. Darin zeigen:

Fig. 1 bis 4 Seitenansichten einer Ausführungsform der Vorrichtung zum automatischen Gruppieren von Setzlagen von Ziegelformlingen, wobei sich der Wagen zur Überführung der Ziegelformlinge von dem Zuführband zur Bereitstellungseinrichtung in verschiedenen Betriebsstellungen befindet, und

Fig. 5 eine Draufsicht auf die erfindungsgemässe Vorrichtung.

In der Zeichnung sind nur diejenigen Teile der erfindungsgemässen Vorrichtung schematisch dargestellt, welche zur Erläuterung des mittels der Vorrichtung durchgeführten erfindungsgemässen Verfahrens unbedingt notwendig sind.

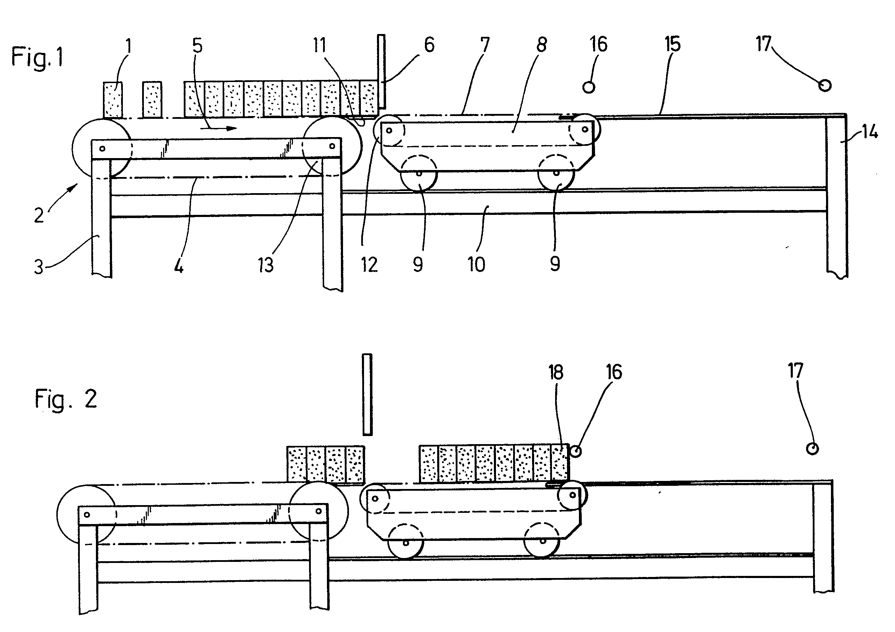

Die zum automatischen Gruppieren von Setzlagen von Ziegelformlingen 1 dienende Vorrichtung 2 weist ein in einem Gestell 3 gelagertes Zuführband 4 auf, auf welchem die Ziegelformlinge 1 in Richtung des Pfeiles 5 gegen einen heb- und senkbaren Anschlag 6 gefördert werden. Wenn sich der Anschlag 6 in der in Fig. 1 gezeigten unteren Stellung befindet, dann werden die Ziegelformlinge 1 durch das Zuführband 4 dicht zusammengeschoben, so dass irgendwelche Stellungsfehler bzw. Ausrichtfehler der Ziegelformlinge beseitigt werden.

In Förderrichtung schliesst sich hinter dem Zuführband in gleicher Ebene ein Laufband 7 an, welches in einem Wagen 8 gelagert ist, der mittels Rädern 9 auf Schienen 10 in Förderrichtung bewegbar ist. Das Zuführband 4, das Laufband 7 und der Wagen 8 besitzen voneinander unabhängige Antriebe, die eine programmgesteuerte Bewegung dieser Teile ermöglichen. Der Zwischenraum zwischen dem Zuführband 4 und dem Laufband 7 ist durch eine Zwischenplatte 11 überdrückt. Es ist jedoch auch denkbar, dass sowohl das Zuführband 4 als auch das Laufband 7 aus einzelnen Längsbahnen bestehen, die im Abstand zueinander angeordnet sind, wobei der Abstand zwischen zwei benachbarten Längsbahnen kleiner als die Breite eines Ziegelformlings 1 ist. In diesem Falle könnten die Längsbahnen des Zuführbandes 4 und des Laufbandes 7 auf Lücke angeordnet sein, so dass die Laufrollen 12 in eine solche Lücke zwischen die Laufrollen 13 eintauchen könnten, um durch eine entsprechende Verschneidung der Transportebenen eine ruckfreie Übergabe der Ziegelformlinge 1 zu ermöglichen.

Aus der Fig. 1 ist ferner zu entnehmen, dass am rechten Ende der Schienen 10 ein Rechen 14 gelagert ist, zwischen dessen Zinken 15 die Laufbahnen des Laufbandes 7 in bezug auf die Fig. 1 nach rechts bewegt werden können. Die Transportebene des Laufbandes 7 befindet sich auf einem höheren Niveau als die Bereitstellungsebene der Zinken 15 des Rechens 14.

Der Rechen 14 wäre selbstverständlich durch ein weiteres Laufband ersetzbar, welches ebenfalls aus mehreren Längsbahnen besteht, zwischen welche die Längsbahnen des Laufbandes 7 hineinbewegbar sind. Das obere Trumm der Längsbahnen des den Rechen ersetzbaren Laufbandes würde ebenfalls auf einem niedrigeren Niveau zu liegen kommen als das Laufband 7, während das untere Trumm vorzugsweise unterhalb des Wagens 8 und ausserhalb der Bewegungsbahn des Wagens zurückgeführt wäre, so dass sich der Wagen 8 innerhalb dieses den Rechen 14 ersetzenden Laufbandes bewegen würde.

Bei einer entsprechenden Wahl der Durchmesserverhältnisse der Umlenkrollen des Laufbandes 7 bzw. des den Rechen 14 ersetzenden Laufbandes wäre es auch denkbar, das den Rechen 14 ersetzende Laufband mit seinen Längsbahnen oberhalb der Achsen der Umlenkrollen 12, 22 des Laufbandes 7 zurückzuführen. Zu diesem Zweck wären dann die in bezug auf die Zeichnungen linken Umlenkrollen des den Rechen 14 ersetzenden Laufbandes freitragend zu lagern.

Die Fig. 1 zeigt ferner noch zwei Lichtschranken 16, 17, auf deren Zweck später noch eingegangen wird.

Es soll nachfolgend nun das erfindungsgemässe Verfahren zum automatischen Gruppieren von Setzlagen der Ziegelformlinge beschrieben werden.

Die Ziegelformlinge 1 werden auf dem Zuführband 4 bis zu dem heb- und senkbaren Anschlag 6 gefördert, der sich gemäss Fig. 1 in seiner unteren Stellung befindet, und gegen diesen dicht geschoben, so dass vorher unregelmässige Abstände der Ziegelformlinge beseitigt werden. Der Wagen 8 befindet sich dabei in seiner linken Endstellung unmittelbar neben der Zwischenplatte 11. Nach dem Stoppen des Zuführbandes 4 wird der Anschlag 6 hochgehoben, wie dies in der Fig. 2 gezeigt ist, so dass die Ziegelformlinge 1 entsprechend einer vorgegebenen Programmsteuerung durch ein erneutes Anfahren des Zuführbandes 4 auf das Band 7 des Wagens 8 übergeben werden, welches sich mit der gleichen Geschwindigkeit in der gleichen Richtung bewegt wie das Zuführband 4. Ist die gewünschte Anzahl der Ziegelformlinge 1 auf dem Laufband 7 erreicht, dann wird das Zuführband 4 abgestellt. Das Laufband 7 wird stillgesetzt, wenn der erste Ziegelformling 18 die Lichtschranke 16 erreicht hat. Dieser Zustand ist in der Fig. 2 dargestellt.

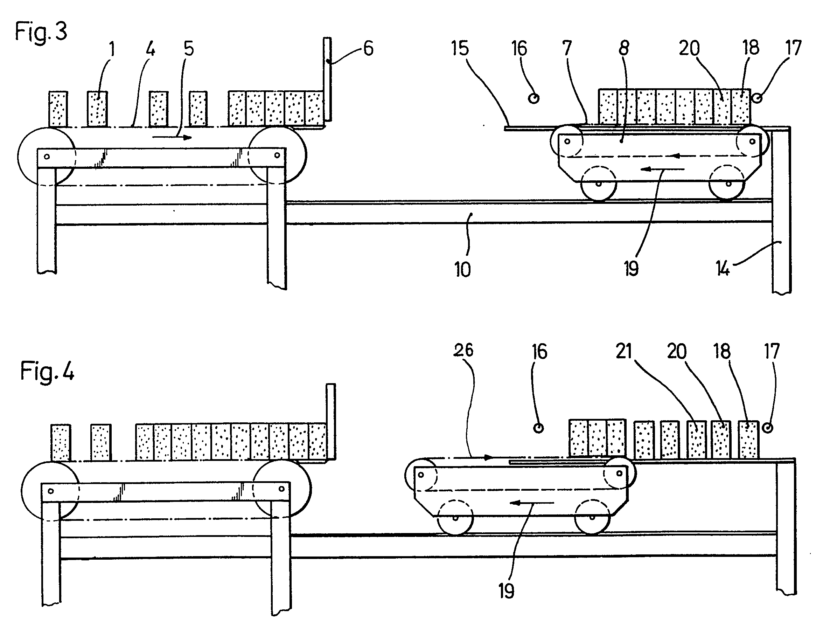

Die Fig. 3 zeigt nun, dass der Anschlag 6 wieder nach unten bewegt worden ist und die Förderung neuer Ziegelformlinge 1 mittels des Zuführbandes 4 in Richtung des Pfeiles 5 gegen den Anschlag 6 beginnt, während der Wagen 8 auf den Schienen 10 in bezug auf die Fig. 3 soweit nach rechts bewegt wird, bis der vordere Ziegelformling 18 die Lichtschranke 17 erreicht hat. Aus der Figur ist ferner zu entnehmen, dass sich in diesem Zustand die Längsbahnen des Laufbandes 7 zwischen den Zinken 15 des Rechens 14 befinden, und zwar auf einem etwas höheren Niveau. Der Wagen 8 beginnt nun sich in Richtung des Pfeiles 19 auf den Schienen 10 zurückzubewegen, während sich das Laufband 7 in Richtung des Pfeiles 26 bewegt. Die Bewegungsgeschwindigkeit des Laufbandes 7 und des Wagens 8 ist gleich gross, so dass der Ziegelformling 18 auf den Zinken 15 des Rechens 14 abgesetzt wird, ohne seinerseits eine Relativbewegung auszuführen. Hierdurch wird vermieden, dass irgendwelche Reibungskräfte am Ziegelformling 18 wirken, so dass der Ziegelformling 18 exakt an einer vorprogrammierten Stelle auf den Zinken 15 des Rechens 14 abgesetzt wird. Nach dem Absetzen des Ziegelformlings 18 wird das Laufband 7 für einen bestimmten vorprogrammierten Augenblick angehalten und dann wieder in Gang gesetzt, während sich der Wagen 8 ununterbrochen in Richtung des Pfeiles 19 zurückbewegt hat. In Abhängigkeit von den Stillstandzeiten des Laufbandes 7 ergeben sich zwischen den einzelnen Ziegelformlings-Querreihen 18, 20, 21 usw. entsprechende Abstände, die gleich gross oder in Abhängigkeit von der Stapelsetzung und für ein optimales Trocknen und Brennen erforderlichen Weise unterschiedlich gross sein können.

Während sich der Wagen 8 wieder in die Ausgangsposition gemäss Fig. 1 bewegt, kann die fertige Setzlage mit Hilfe des Rechens 14 an einen Brenn- und Trockenwagen übergeben werden, oder die fertige Setzlage kann mit Hilfe eines nicht dargestellten Greifers aufgenommen und auf einem solchen Wagen abgesetzt werden.

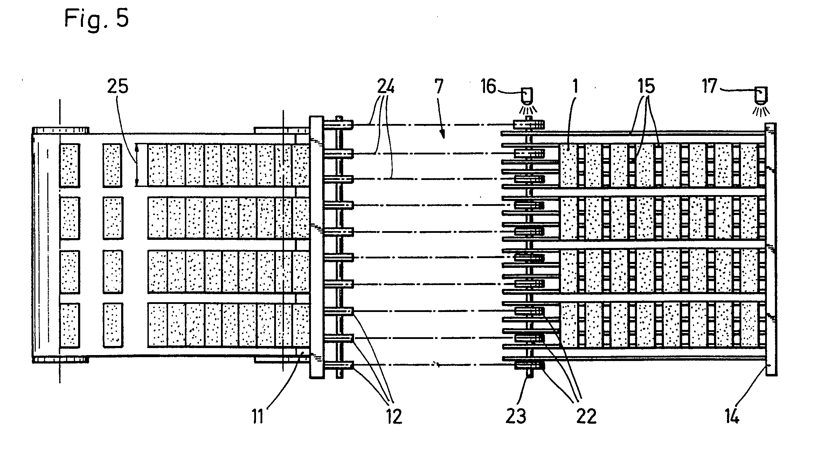

Anhand der Fig. 5 ist zu erkennen, dass die Ziegelformlinge 1 in genauen gleichmässigen Abständen nebeneinander auf den Zinken 15 des Rechens 14 angeordnet sind. Es ist ferner zu erkennen, dass die ebenfalls nebeneinander auf einer Welle 23 angeordneten Laufrollen 22 zwischen die Zinken 15 des Rechens 14 einfahrbar sind und dass das Laufband 7 aus einzelnen nebeneinander angeordneten Längsbahnen 24 besteht, welche über die Laufrollen 12, 22 geführt sind. Der Abstand der Längsbahnen 24 und der Zinken 15 des Rechens 14 ist kleiner als die Breite 25 der Ziegelformlinge.

## Patentansprüche

1. Verfahren zum automatischen Gruppieren von Setzlagen eines Stapelgutes, insbesondere von Ziegelformlingen (1), wobei die Setzlagen des Stapelgutes in vorzugsweise mehreren nebeneinanderliegenden Längszeilen in Stapelbreite auf ein Zuführband (4) aufgegeben werden, welches das Stapelgut gegen eine Stoppvorrichtung (16), insbesondere einen Richtbalken, schiebt und stillgesetzt wird, woraufhin die Stoppvorrichtung angehoben wird und die ausgerichtete Setzlage auf ein sich an das Zuführband anschliessendes und mit gleicher Geschwindigkeit wie das Zuführband in Bewegung gesetztes Laufband (7) übergeben wird, dadurch gekennzeichnet, dass die Umlaufbewegung des Laufbandes (7) nach des Übergabe des Stapelgutes unterbrochen und das Laufband mit seinem Träger zu einer Bereitstellungseinrichtung geführt wird, wo das Stapelgut dann mit dem wieder in Umlaufbewegung gesetzten Laufband (7) auf die Bereitstellungseinrichtung übergeben wird, während gleichzeitig das Laufband (7) wieder mit seinem Träger in entgegengesetzter Richtung zum Zuführband (4) zurückgeführt wird, wobei die Umlaufbewegung des Laufbandes (7) automatisch in Intervallen unterbrochen wird, so dass auf der Bereitstellungseinrichtung eine Setzlage gebildet wird, in welcher die einzelnen Querreihen (18, 20, 21) in vorbestimmbaren, ggf. unterschiedlichen Abständen zu liegen kommen, und wobei die Geschwindigkeiten der Rückbewegung des Laufbandes (7) mit seinem Träger und der Umlaufbewegung des Laufbandes gleich gross sind, so dass die Übergabegeschwindigkeit auf die Bereitstellungseinrichtung Null ist.

2. Verfahren nach Anspruch 1, dadurch gekennzeichnet, dass das Zuführband (4) eine nachfolgende Setzlage gegen die wieder abgesenkte Stoppvorrichtung schiebt, während das Laufband (7) mit seinem Träger zur Bereitstellungseinrichtung geführt wird.

3. Vorrichtung zur Durchführung des Verfahrens nach einem der beiden Ansprüche 1 oder 2, mit einem Zuführband (4) und einem in gleicher Ebene angeordneten Laufband (7), die über je einen Antrieb antreibbar sind, und mit einer sich im Bereich des Endes des Zuführbandes (4) befindlichen Stoppvorrichtung (6), gegen welche das Stapelgut ausrichtbar ist, dadurch gekennzeichnet, dass

a) das Laufband (7) mehrere in seitlichem Abstand zueinander angeordnete Längsbahnen (24) aufweist und auf einem bewegbaren Wagen (8) gelagert ist, und dass

b) im Abstand zum Zuführband (4) eine Bereitstellungseinrichtung vorgesehen ist, welche mehrere in seitlichem Abstand zueinander und auf Lücke zu den Längsbahnen (24) des Laufbandes (7) angeordnete Längsbahnen aufweist und auf welche die Setzlage mittels des Laufbandes (7) absetzbar ist, derart, dass die Übergabegeschwindigkeit einer Querreihe (18 bzw. 20 bzw. 21) beim Absetzen Null ist.

4. Vorrichtung nach Anspruch 3, dadurch gekennzeichnet, dass das Laufband (7) und die Bereitstellungseinrichtung auf einem unterschiedlichen Niveau liegen.

5. Vorrichtung nach einem der beiden Ansprüche 3 oder 4, dadurch gekennzeichnet, dass die Bereitstellungseinrichtung von antreibbaren Laufbändern gebildet ist.

6. Vorrichtung nach einem der beiden Ansprüche 3 oder 4, dadurch gekennzeichnet, dass die Bereitstellungseinrichtungen von einem bewegbaren Rechen (14) gebildet ist.

7. Vorrichtung nach Anspruch 3, dadurch gekennzeichnet, dass der Wagen (8) auf in Transportrichtung verlaufenden Führungseinrichtungen gelagert ist.

8. Vorrichtung nach einem der Ansprüche 3 bis 7, dadurch gekennzeichnet, dass zur Steuerung der Laufbandbewegung und der Bewegung des Wagens elektro-optische Steuereinrichtungen vorgesehen sind.

9. Vorrichtung nach Anspruch 8, dadurch gekennzeichnet, dass die Steuereinrichtungen Lichtschranken (16, 17) sind, welche durch das Stapelgut schaltbar sind.

**Claims**

1. Process for the automatic grouping of positional placings of stacked goods, particularly of small brick-shaped items (1), in which the positional placings of stacked goods are given by several adjacent longitudinal lines across the stacking width on a feed belt (4), which pushes the goods against a stop device (6), in particular a straight beam, and then stops, whereupon the stop device is lifted and the aligned placing is transferred to a conveyer belt (7) which moves together with, and at the same speed as, the feed belt, characterised by the fact that the rotating movement of the conveyer belt (7) is interrupted after the stacked goods have been transferred, and the conveyer belt with its carriage, is guided to a disposal device, where the stacked goods are transferred from the conveyer belt (7), which has again been set into rotational movement, to the disposal device, while at the same time the conveyer belt (7) is returned with its carriage in the opposite direction, to the feed belt (4), whereby the rotational movement of the conveyer belt (7) is automatically interrupted at intervals, so that a placing is formed on the disposal device, in which the individual transverse series (18, 20, 21) come to lie at predetermined or, as appropriate, different distances, and whereby the speeds of the return movement of the conveyer belt (7) with its carriage, and of the rotational movement of the conveyer belt, are of the same size, so that the speed of transfer onto the disposal device is zero.

2. Process according to claim 1, characterised by the fact that the feed belt (4) pushes a subsequent placing against the stop device, which has been dropped again, while the conveyer belt (7) with its carriage, is guided towards the disposal device.

3. Equipment for carrying out the process according to claim 1 or 2, with a feed belt (4) and a conveyer belt (7), arranged in the same plane, each of which can be driven by means of a drive mechanism, and with a stop device (6) situated in the region of the end of the feed belt (4), against which the stacked goods are aligned, characterised by the fact that,

a) the conveyer belt (7) has several longitudinal tracks (24) arranged side-by-side with spacings between them, and is supported on a moveable carriage (8), and that

b) a disposal device is provided at a distance from the feed belt (4), which has several longitudinal tracks arranged side-by-side with spacings between them, and with a gap between them and the longitudinal tracks (24) of the conveyer belt (7), onto which the placing can be deposited by means of the conveyer belt (7), in such a way that the speed of transfer of a transverse series (18 or 20 or 21) is zero during the transfer.

4. Equipment according to claim 3, characterised by the fact that the conveyer belt (7) and the disposal device lie at different levels.

5. Equipment according to claim 3 or 4, characterised by the fact that the disposal device is formed by conveyer belts which can be driven.

6. Equipment according to claim 3 or 4, characterised by the fact that the disposal device is formed from a moveable rake (14).

7. Equipment according to claim 3, characterised by the fact that the carriage (8) is supported on a track guide running in the direction of transportation.

8. Equipment according to one of the claims 3 to 7, characterised by the fact that electro-optical control devices are provided for controlling the movement of the conveyer belt, and the movement of the carriage.

9. Equipment according to claim 8, characterised by the fact that the control devices are light-boxes (16, 17), which can be switched by the stacked goods.

**Revendications**

1. Procédé pour le groupement automatique de lots d'articles empilés, en particulier de briques crues (1), les couches déposées des articles empilés étant délivrées de préférence en plusieurs lignes longitudinales juxtaposées dans le sens de la largeur d'empilement, sur une bande d'amenée (4) qui pousse les articles empilés contre un dispositif d'arrêt (6), en particulier une poudre directrice, et est immobilisée, après quoi le dispositif d'arrêt est élevé et la couche déposée alignée est transférée à une bande de roulement (7) qui est adjacente à la bande d'amenée et est mise en mouvement à la même vitesse que la bande d'amenée, caractérisé par le fait que le mouvement de rotation de la bande de roulement (7) est interrompu après le transfert des articles empilés et la bande de roulement est dirigée avec son support vers un dispositif de mise en place où les articles empilés sont ensuite transférés au dispositif de mise en place avec la bande de roulement (7) mise de nouveau en mouvement de rotation, cependant que, en même temps, la bande de roulement (7) est de nouveau ramenée avec son support dans la direction inverse vers la bande d'amenée (4), le mouvement de rotation de la bande de roulement (7) étant automatiquement interrompu par intervalles de telle sorte que soit formée, sur le dispositif de mise en place, une couche déposée dans laquelle les rangées transversales individuelles (18, 20, 21) viennent se placer à des espacements prédéterminables et éventuellement différents, les vitesses du mouvement de retour de la bande de roulement (7) avec son support et du mouvement de rotation de la bande de roulement étant égales, si bien que la vitesse de transfert vers le dispositif de mise en place est nulle.

2. Procédé selon la revendication 1, caractérisé par le fait que la bande d'amenée (4) pousse une couche déposée successive vers le dispositif d'arrêt de nouveau abaissé, cependant que la bande de roulement (7) avec son support est dirigée vers le dispositif de mise en place.

3. Dispositif pour la mise en œuvre du procédé selon l'une des revendications 1 ou 2, avec une bande d'amenée (4) et une bande de roulement (7) placée dans le même plan, qui peuvent être entraînées chacune par un entraînement respectif, et avec un dispositif d'arrêt (6) situé dans la région de la fin de la bande d'amenée (4) et vers lequel les articles empilés peuvent être alignés, caractérisé par le fait que:

a) la bande de roulement (7) présente plusieurs pistes longitudinales (24) espacées latéralement les unes des autres et est montée sur un chariot mobile (8), et

b) à distance de la bande d'amenée (4), il est prévu un dispositif de mise en place qui présente plusieurs pistes longitudinales distantes latéralement les unes des autres et disposées avec des interstices par rapport aux pistes longitudinales (24) de la bande de roulement (7) et sur lequel la couche peut être déposée au moyen de la bande de roulement (7) de telle sorte que la vitesse de transfert d'une rangée transversale (18 ou 20 ou 21) soit nulle lors du dépôt.

4. Le dispositif selon la revendication 3, caractérisé par le fait que la bande de roulement (7) et le dispositif de mise en place se trouvent à des niveaux différents.

5. Dispositif selon l'une des revendications 3 ou 4, caractérisé par le fait que le dispositif de mise en place est formé par des bandes de roulement pouvant être entraînées.

6. Dispositif selon l'une des revendications 3 ou 4, caractérisé par le fait que le dispositif de mise en place est formé par un râteau mobile (14).

7. Dispositif selon la revendication 3, caractérisé par le fait que le chariot (8) est monté sur des dispositifs de guidage orientés dans la direction du transport.

8. Dispositif selon l'une des revendications 3 à 7, caractérisé par le fait que des dispositifs électro-optiques de commande sont prévus pour commander le mouvement de la bande de roulement et le déplacement du chariot.

9. Dispositif selon la revendication 8, caractérisé par le fait que les dispositifs de commande sont des barrières photo-électriques (16, 17) qui peuvent être enclenchées par les articles empilés.

Fig.1

Fig. 2

Fig.3

Fig.4

Fig. 5

0 022 447